# FASCICULE DE BREVET EUROPEEN

(11) **EP 2 865 506 B1**
(45) Date de publication et mention de la délivrance du brevet: **05.04.2017**
(21) Numéro de dépôt: 14189328.9
(22) Date de dépôt: 17.10.2014
(51) Int. Cl.: B29C 45/14, B60R 13/00

(54) **Composant de véhicule automobile à base de matériau thermoplastique moulé**
Kraftfahrzeugkomponente aus thermoplastisch geformtem Material
Motor vehicle component made of moulded thermoplastic material

(30) Priorité: 23.10.2013 FR 1360344
(43) Date de publication de la demande: 29.04.2015
(73) Titulaire: CENTRE D'ETUDE ET DE RECHERCHE POUR L'AUTOMOBILE (CERA), 51100 Reims (FR)
(72) Inventeur: Drezet, David, 51400 Prosnes (FR); Raybaut, Michael, 02820 Corbeny (FR); Vitrant, Olivier, 51100 Reims (FR); Ribes, Stéphane, 51140 Romain (FR)
(74) Mandataire: Sayettat, Julien Christian

(56) Documents cités:
- EP-A1- 2 664 433
- WO-A1-2007/075462
- DE-A1-102009 016 177
- DE-A1-102011 018 559

## Description

L'invention concerne un composant, notamment de véhicule automobile, comprenant un corps à base de matériau thermoplastique moulé et un procédé de réalisation d'un tel composant.

Les document DE-10 2009 016 177 et WO 2007/075 462 décrivent un tel composant décorative. Il est connu de réaliser un tel composant dans lequel le corps est pourvu en surface d'un médaillon métallique, par exemple de décoration.

En raison de la difficulté à assurer une cohésion durable entre métal et plastique, il est nécessaire de prévoir sur le médaillon et dans le corps des formes complémentaires permettant un ancrage mécanique entre les deux.

Par exemple, il peut être prévu que le médaillon soit pourvu d'orifices au travers desquels s'étend le matériau thermoplastique en débordant de l'autre côté pour assurer un « rivetage plastique ».

Malgré le manque d'esthétique d'un composant ainsi agencé, une telle façon de procéder peut convenir pour un médaillon d'épaisseur suffisamment importante, non susceptible de se déformer suite au retrait du matériau thermoplastique s'opérant lors de son refroidissement.

En revanche, dans le cas de médaillons de fine épaisseur, notamment inférieure à 1 mm, utilisés en particulier comme enjoliveurs ou plaques d'insertion d'un marquage tel qu'un logo, on peut observer, notamment en cas d'ancrage périphérique, une déformation du médaillon par gondolement après retrait du matériau plastique.

L'invention a pour but de proposer un agencement permettant de pallier ces inconvénients.

A cet effet, et selon un premier aspect, l'invention propose un composant, notamment de véhicule automobile, comprenant un corps à base de matériau thermoplastique moulé, ledit corps étant pourvu en surface d'un médaillon métallique, ledit médaillon étant pourvu, sur tout ou partie de sa face d'envers, d'une couche d'envers en matériau poreux qui lui est associée par collage, ladite couche étant en outre surmoulée par ledit corps de manière à réaliser un accrochage mécanique entre ladite couche et ledit corps.

Avec l'agencement proposé, on réalise un accrochage par collage du côté du médaillon et par surmoulage du côté du corps.

L'accrochage mécanique réalisé par le surmoulage se fait par pénétration au moins partielle du matériau thermoplastique dans les pores du matériau poreux, avec pour résultat de créer une multiplicité de micro-ancrages permettant d'assurer une cohésion forte entre le corps et la couche d'envers.

Par ailleurs, la colle est choisie pour assurer une bonne cohésion entre le métal et le matériau poreux.

Par ailleurs, un tel agencement permet de réaliser une absorption des retraits par la colle et/ou la couche d'envers, qui se rétracte avec le matériau thermoplastique, avec pour conséquence de ne pas nuire à la cohésion recherchée.

Enfin, avec un tel agencement, un « rivetage plastique » ou tout autre moyen d'ancrage mettant en jeu des formes complémentaires dans le corps et dans le médaillon s'avère superflu, ce qui permet d'obtenir un composant d'esthétique optimisée.

Selon un deuxième aspect, l'invention propose un procédé de réalisation d'un tel composant.

D'autres particularités et avantages de l'invention apparaîtront dans la description qui suit, faite en référence aux figures jointes, dans lesquelles :
- la figure 1 est une vue schématique en coupe partielle d'un composant selon une première réalisation,
- la figure 2 est une vue schématique en coupe partielle d'un composant selon une deuxième réalisation.

En référence aux figures, on décrit un composant 1, notamment de véhicule automobile, comprenant un corps 2 à base de matériau thermoplastique moulé, ledit corps étant pourvu en surface d'un médaillon 3 métallique, ledit médaillon étant pourvu, sur tout ou partie de sa face d'envers, d'une couche d'envers 4 en matériau poreux qui lui est associée par collage.

En particulier, un film de colle 5 est interposé entre la couche d'envers 4 et le médaillon 3, ledit film pouvant être continu ou discontinu et présenter une déformabilité favorisant l'absorption des retraits. Selon une réalisation, la colle est de nature acrylique. L'épaisseur du film de colle 5 est par exemple de l'ordre de 0,5 mm, de manière à assurer un collage satisfaisant tout en évitant qu'elle ne bave en périphérie du médaillon 3.

La couche 4 est en outre surmoulée par le corps 2 de manière à réaliser un accrochage mécanique entre ladite couche et ledit corps.

Le médaillon 3 présente notamment une épaisseur maximale de 1 mm, et en particulier de l'ordre de 0,5 mm. Le métal constitutif du médaillon 3 est par exemple de l'aluminium.

Le matériau thermoplastique est par exemple un polypropylène ou un polyamide. On peut prévoir que le matériau thermoplastique contienne une charge, par exemple sous forme de fibres de renfort de type fibres de verre.

Selon une réalisation, le matériau poreux est à base de fibres. En particulier, le matériau poreux est un non tissé, par exemple à base de fibres de polyéthylène téréphtalate. Selon une réalisation, la masse surfacique du non-tissé est comprise entre 20 et 100 g/m².

Selon une autre réalisation, le matériau poreux est une mousse, par exemple de polyuréthanne.

Selon les réalisations représentées, le médaillon 3 est serti dans un logement 6 prévu dans le corps 2.

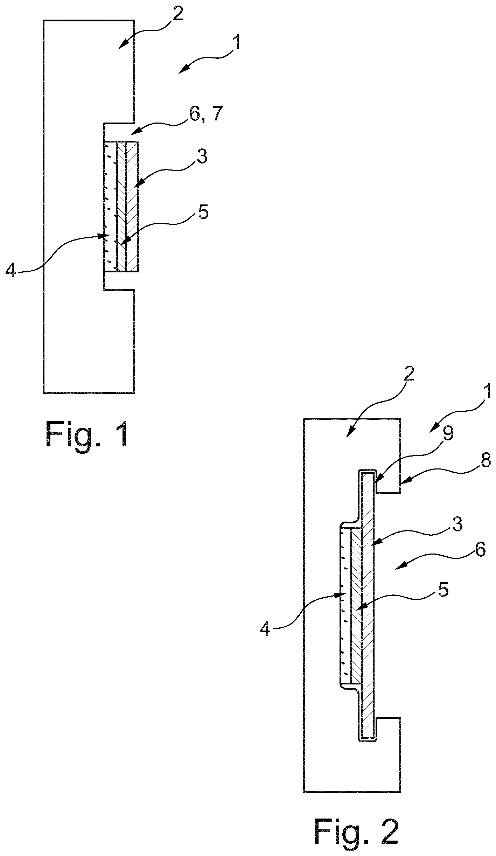

Sur la figure 1, le médaillon 3 est de moindre dimension que le logement 6 de sorte qu'un espace périphérique 7 de retrait soit ménagé entre ledit médaillon et ledit logement.

Un tel agencement permet d'éviter, dans le cas d'un sertissage du médaillon 3 dans un logement 6, tout risque de déformation dudit médaillon qui pourrait être occasionnée par le retrait du matériau thermoplastique.

Selon la réalisation de la figure 2, le logement 6 présente un surplomb 8 périphérique recouvrant une bande 9 périphérique de la face d'endroit du médaillon 3.

Comme représenté en figure 2, la couche d'envers 4 occupe partiellement la face d'envers du médaillon 3 en zone centrale, ce qui permet de minimiser la quantité de colle et de couche d'envers 4 à utiliser, la périphérie dudit médaillon étant maintenue par le surplomb 8.

On décrit enfin un procédé de réalisation d'un composant 1, ledit procédé comprenant les étapes suivantes :
- prévoir un médaillon 3 métallique, ledit médaillon étant pourvu, sur tout ou partie de sa face d'envers, d'une couche d'envers 4 en matériau poreux qui lui est associée par collage,
- disposer ledit médaillon pourvu de ladite couche d'envers dans un moule d'injection,
- injecter un matériau thermoplastique dans ledit moule de façon à former un corps 2 en matériau thermoplastique surmoulant ladite couche, de manière à réaliser un accrochage mécanique entre ladite couche et ledit corps,
- démouler le composant 1 obtenu.

Il peut notamment être prévu seulement une cohésion sommaire entre la couche d'envers 4 et le médaillon 3 avant le moulage du corps 2, la colle étant activée par la chaleur apportée lors de l'injection du matériau thermoplastique et une cohésion optimale étant réalisée sous l'effet de la pression mise en jeu par ledit matériau à l'état liquide comprimant ladite couche d'envers contre ledit médaillon.

## Revendications

1. Composant (1), notamment de véhicule automobile, comprenant un corps (2) à base de matériau thermoplastique moulé, ledit corps étant pourvu en surface d'un médaillon (3) métallique, ledit composant étant **caractérisé en ce que** ledit médaillon est pourvu, sur tout ou partie de sa face d'envers, d'une couche d'envers (4) en matériau poreux qui lui est associée par collage, ladite couche étant en outre surmoulée par ledit corps de manière à réaliser un accrochage mécanique entre ladite couche et ledit corps.

2. Composant selon la revendication 1, **caractérisé en ce qu'**un film de colle (5) est interposé entre la couche d'envers (4) et le médaillon (3).

3. Composant selon l'une des revendications 1 ou 2, **caractérisé en ce que** le matériau poreux est à base de fibres.

4. Composant selon la revendication 3, **caractérisé en ce que** le matériau poreux est un non tissé.

5. Composant selon l'une des revendications 1 ou 2, **caractérisé en ce que** le matériau poreux est une mousse.

6. Composant selon l'une quelconque des revendications 1 à 5, **caractérisé en ce que** le médaillon (3) est serti dans un logement (6) prévu dans le corps (2).

7. Composant selon la revendication 6, **caractérisé en ce que** le médaillon (3) est de moindre dimension que le logement (6) de sorte qu'un espace périphérique (7) de retrait soit ménagé entre ledit médaillon et ledit logement.

8. Composant selon la revendication 6, **caractérisé en ce que** le logement (6) présente un surplomb (8) périphérique recouvrant une bande (9) périphérique de la face d'endroit du médaillon (3).

9. Composant selon la revendication 8, **caractérisé en ce que** la couche d'envers (4) occupe partiellement la face d'envers du médaillon (3) en zone centrale.

10. Procédé de réalisation d'un composant (1) selon l'une quelconque des revendications 1 à 9, **caractérisé en ce qu'**il comprend les étapes suivantes :
• prévoir un médaillon (3) métallique, ledit médaillon étant pourvu, sur tout ou partie de sa face d'envers, d'une couche d'envers (4) en matériau poreux qui lui est associée par collage,
• disposer ledit médaillon pourvu de ladite couche d'envers dans un moule d'injection,
• injecter un matériau thermoplastique dans ledit moule de manière à former un corps (2) en matériau thermoplastique surmoulant ladite couche de manière à réaliser un accrochage mécanique entre ladite couche et ledit corps,
• démouler le composant (1) obtenu.

## Patentansprüche

1. Bauteil (1), insbesondere von Kraftfahrzeugen, welches einen Körper (2) aus spritzgegossenem thermoplastischem Material umfasst, wobei der besagte Körper an der Oberfläche mit einem metallenen Medaillon (3) versehen ist, wobei das besagte Bauteil **dadurch gekennzeichnet ist, dass** das besagte Medaillon auf der gesamten oder einem Teil seiner Rückseite mit einer Rückschicht (4) aus porösem Material versehen ist, die durch Klebung mit ihm verbunden ist, wobei die besagte Schicht des Weiteren derart von dem besagten Körper umformt ist, dass eine mechanische Verankerung zwischen der besagten Schicht und dem besagten Körper erzielt wird.

2. Bauteil nach Anspruch 1, **dadurch gekennzeichnet, dass** zwischen der Rückschicht (4) und dem Medaillon (3) ein Klebstofffilm (5) eingefügt ist.

3. einem der Ansprüche 1 oder 2, **dadurch gekennzeichnet, dass** das poröse Material aus Fasern besteht.

4. Bauteil nach Anspruch 3, **dadurch gekennzeichnet, dass** es sich bei dem porösen Material um ein Vlies handelt.

5. Bauteil nach einem der Ansprüche 1 oder 2, **dadurch gekennzeichnet, dass** es sich bei dem porösen Material um einen Schaum handelt.

6. Bauteil nach einem der Ansprüche 1 bis 5, **dadurch gekennzeichnet, dass** das Medaillon (3) in einer in dem Körper (2) vorgesehenen Aufnahme (6) gefasst ist.

7. Bauteil nach Anspruch 6, **dadurch gekennzeichnet, dass** das Medaillon (3) eine kleinere Abmessung als die Aufnahme (6) besitzt, so dass ein umlaufender Spalt (7) zwischen dem besagten Medaillon und der besagten Aufnahme gebildet wird.

8. Bauteil nach Anspruch 6, **dadurch gekennzeichnet, dass** die Aufnahme (6) eine umlaufende Auskragung (8) aufweist, die einen umlaufenden Streifen (9) der Vorderseite des Medaillons (3) bedeckt.

9. Bauteil nach Anspruch 8, **dadurch gekennzeichnet, dass** die Rückschicht (4) die Rückseite des Medaillons (3) im Mittelbereich zum Teil besetzt.

10. Verfahren zur Herstellung eines Bauteils (1) nach einem der Ansprüche 1 bis 9, **dadurch gekennzeichnet, dass** es die folgenden Schritte umfasst:
- Vorsehen eines metallenen Medaillons (3), wobei das besagte Medaillon auf der gesamten oder einem Teil seiner Rückseite mit einer Rückschicht (4) aus porösem Material versehen ist, die durch Klebung mit ihm verbunden ist,
- Anordnen des besagten Medaillons, das mit der besagten Rückschicht versehen ist, in einer Spritzgießform,
- Einspritzen eines thermoplastischen Materials in die besagte Form derart, dass ein Körper (2) aus thermoplastischem Material gebildet wird, der die besagte Schicht derart umformt, dass eine mechanische Verankerung zwischen der besagten Schicht und dem besagten Körper erzielt wird,
- Entformen des erhaltenen Bauteils (1).

## Claims

1. Component (1), in particular for a motor vehicle, comprising a body (2) based on a moulded thermoplastic material, said body being provided on the surface with a metal medallion (3), said component being **characterised in that** said medallion is provided, over all or part of its reverse face, with a back layer (4) of porous material that is associated therewith by adhesive bonding, said layer further being overmoulded with said body so as to achieve a mechanical attachment between said layer and said body.

2. Component according to claim 1, **characterised in that** a film of adhesive (5) is interposed between the back layer (4) and the medallion (3).

3. Component according to either claim 1 or claim 2, **characterised in that** the porous material is based on fibres.

4. Component according to claim 3, **characterised in that** the porous material is non-woven.

5. Component according to either claim 1 or claim 2, **characterised in that** the porous material is a foam.

6. Component according to any of claims 1 to 5, **characterised in that** the medallion (3) is crimped in a housing (6) provided in the body (2).

7. Component according to claim 6, **characterised in that** the medallion (3) is of smaller size than the housing (6) so that a peripheral recessed space (7) is provided between said medallion and said housing.

8. Component according to claim 6, **characterised in that** the housing (6) has a peripheral overhang (8) covering a peripheral band (9) of the front face of the medallion (3).

9. Component according to claim 8, **characterised in that** the back layer (4) partially occupies the reverse face of the medallion (3) in the central zone.

10. Method for producing a component (1) according to any of claims 1 to 9, **characterised in that** it comprises the following steps:
- providing a metal medallion (3), said medallion being provided, over all or part of its reverse face, with a back layer (4) made from porous material that is associated with it by adhesive bonding,
- disposing said medallion provided with said back layer in an injection mould,
- injecting a thermoplastic material into said mould so as to form a body (2) made from thermoplastic material moulded onto said layer so as to produce a mechanical attachment between said layer and said body,
- removing the component (1) obtained from the mould.
